Europäisches Patentamt

European Patent Office

Office européen des brevets

(19)

(11) Publication number: **0 131 765**

**A1**

(12) **EUROPEAN PATENT APPLICATION**

(21) Application number: **84106839.8**

(22) Date of filing: **15.06.84**

(51) Int. Cl.⁴: **A 01 N 43/80**
**A 01 N 25/32**
**//(A01N43/80, 35/10)**

(30) Priority: **16.06.83 US 504771**

(43) Date of publication of application:
**23.01.85 Bulletin 85/4**

(84) Designated Contracting States:
**AT BE CH DE FR GB IT LI NL SE**

(71) Applicant: **EGYT GYOGYSZERVEGYESZETI GYAR**
**Kereszturi ut 30-38**
**Budapest X(HU)**

(72) Inventor: **Heilman, William P.**
**6 Quincy Place**
**Dayton New Jersey(US)**

(72) Inventor: **Felix, Earl D.**
**3 Apache Drive**
**Pennington New Jersey(US)**

(74) Representative: **Beszédes, Stephan G. Dr.**
**Münchener Strasse 80a Postfach 1168**
**D-8060 Dachau(DE)**

(54) The use of 2-(propargyloxyimino)-1,7,7-tri-(methyl)-bicyclo2.2.1heptane.

(57) The application is concerned with the use of 2-(propargyloxyimino)-1, 7, 7-tri-(methyl)- -bicyclo[2.2.1] heptane as an antidotum with regard to the herbicide 2-[{2'-(chloro)-phenyl}-methyl]--4,4-di-[methyl]- isoxazolidin -3-one for the protection of rice and sorghum against damage by the said herbicide.

EP 0 131 765 A1

The invention is concerned with a new use of 2-(propargyloxyimino)-1,7,7-tri-(methyl)-bicyclo[2.2.1]heptane. The expression 2-(propargyloxyimino)-1,7,7-tri-(methyl)-bicyclo[2.2.1]heptane used in this disclosure comprises both the racemic and the optically active forms of this compound unless otherwise stated.

2-(Propargyloxyimino)-1,7,7-tri-(methyl)-bicyclo[2.2.1]heptane ⟨heptopargil⟩ is a compound known from US-patent 4,244,888 for use as a plant regulator, for example, also for rice and sorghum, which promotes the plant growth and increases the yield of crops also its use for the seed treatment for this purpose having been mentioned.

The compound 2-[{2'-(chloro)-phenyl}-methyl]-4,4-di-[methyl]-isoxazolidin-3-one is a known herbicide for use in controlling weeds, primarily grasseous weeds in various crops, for example, soybeans and potatoes. This compound is known primarily as a pre-emergent herbicide, one which is applied at or before planting for post-emergent weed control. The usual method for the application of such compounds is to apply them to or incorporate them in the soil in which seeds or seedlings are or are about to be planted.

The problem underlying to the invention is to create the use of a compound by which rice and sorghum effectively can be protected against the herbicide 2-[{2'-(chloro)-phenyl}-methyl]-4,4-di-[methyl]-isoxazolidin-3-one.

Surprisingly the above has been attained by the invention.

Surprisingly it has been determined that when
using 2-(propargyloxyimino)-1,7,7-tri-(methyl)-
-bicyclo[2.2.1]heptane as an antidotum with regard
to the herbicide 2-[{2'-(chloro)-phenyl}-methyl]-
-4,4-di-[methyl]-isoxazolidin-3-one to rice and
sorghum, particularly to seeds of them prior to
planting them, the former drastically protects the
rice or the sorghum, respectively from damage by the
latter on account of the phytotoxic effects of it.

Hence the subject-matter of the invention is the
use of 2-(propargyloxyimino)-1,7,7-tri-(methyl)-
-bicyclo[2.2.1]heptane as an antidotum with regard
to the herbicide 2-[{2'-(chloro)-phenyl}-methyl]-
-4,4-di-[methyl]-isoxazolidin-3-one for the protection of rice and sorghum against damage by the
said herbicide.

The use according to the invention comprises that
of the racemic and/or optically active form(s) of it.

The above is all the more surprising since the
protective effect with the 2-(propargyloxyimino)-
-1,7,7-tri-(methyl)-bicyclo[2.2.1]heptane occurs only
to a slight degree with other agricultural useful crops,
for example, cotton, and has not been noticeable with
regard to other herbicides.

The use according to the invention is preferably a
treatment of rice or sorghum seeds, respectively. In
doing so it is preferred that the treatment of rice or
sorghum seeds, respectively, is carried out with at least
0.03% by weight, particularly 0.03 to 0.75% by weight,
above all 0.03 to 0.25% by weight, of the 2-(propargyl-
oxyimino)-1,7,7-tri-(methyl)-bicyclo[2.2.1]heptane, based on the weight of the untreated rice or sorghum
seeds, respectively. It is particularly preferred to
carry out the treatment of rice or sorghum seeds,
respectively, with 0.06 to 0.5% by weight, above
all 0.06 to 0.25% by weight, of the 2-(propargyl-
oxyimino)-1,7,7-tri-(methyl)-bicyclo[2.2.1]heptane,
based on the weight of the untreated rice or sorghum
seeds, respectively.

Suitably the use according to the invention is
carried out as coating the seeds with the 2-(pro-
pargyloxyimino)-1,7,7-tri-(methyl)-bicyclo[2.2.1]heptane.

The 2-(propargyloxyimino)-1,7,7,-tri-(methyl)-
-bicyclo[2.2.1]heptane may be present dissolved in
a solvent, such as acetone, prepared with 1 or more
other inert and/or active ingredient(s) or as such
together with an adhesive agent suitable for retaining the 2-(propargyloxyimino)-1,7,7-tri-(methyl)-
-bicyclo[2.2.1]heptane on the seeds during handling
and planting and may be applied in such forms to the
seeds. Beyond these preparation and application forms
all other known ones are possible. The following specific experiments have been carried out with the racemic
form of 2-(propargyloxyimino)-1,7,7-tri-(methyl)-
-bicyclo[2.2.1]heptane but analogous results have
been achieved with the optically active forms of it.

From the following tables I and II results the
protective effect of 2-(propargyloxyimino)-1,7,7-tri-
-(methyl)-bicyclo[2.2.1]heptane with regard to
2-[{2'-(chloro)-phenyl}-methyl]-4,4-di-[methyl]--isoxazolidin-3-one on rice (Labelle cultivar). Prior
to planting  rice seeds were coated with the 2-(propar-
gyloxyimino)-1,7,7-tri-(methyl)-bicyclo[2.2.1]heptane
by stirring a weighed amount of seeds in an acetone
solution containing the calculated amount of a 50%
by weight emulsifiable concentrate of 2-(propargyl-
oxyimino)-1,7,7-tri-(methyl)-bicyclo[2.2.1]heptane
and letting evaporate the acetone. The amount of
2-(propargyloxyimino)-1,7,7-tri-(methyl)-
-bicyclo[2.2.1]heptane applied ranged from 0.031%
by weight to 0.250% by weight based on the weight
of the seeds. After having planted the seeds
2-[{2'-(chloro)-phenyl}-methyl]-4,4-di-[methyl]-
-isoxazolidin-3-one was sprayed as an aqueous emulsion
on the surface of the soil at rates of 0.125, 0.250
or 0.500 kg/ha, respectively. As a  comparative test,
also flats of seeds which had not received a
2-(propargyloxyimino)-1,7,7-tri-(methyl)-
-bicyclo[2.2.1]heptane coating prior to planting
were treated with the same rates of
2-[{2'-(chloro)-phenyl}-methyl]-4,4-di-[methyl]-
-isoxazolidin-3-one. Also seeds treated with
2-(propargyloxyimino)-1,7,7-tri-(methyl)-
-bicyclo[2.2.1]heptane were planted in flats
which were not treated with the said herbicide.

3 weeks after  treatment in all experiments
the vigor of the surviving plants and the percentage
of the plants which had been killed were determined.
The Biological Effectiveness was calculated from
these values according to the following equation

Biological Effectiveness = % Kill + X (100 - % Kill), in which X was determined according to the following
criteria.

| Vigor Rating | Description | Value of X |
|---|---|---|
| 1 | Severe to Fatal Injury | 1 |
| 2 | Moderate to Severe Injury | 0.75 |
| 3 | Moderate Injury | 0.25 |
| 4 | Slight Injury | 0.12 |
| 5 | Normal Plants | 0 |

A high value for the Biological Effectiveness with regard to a specific crop indicates high phytotoxicity toward this crop, and a low value indicates that the herbicide may be used safely with that crop, i.e. the crop is tolerant of the herbicide or the 2-(propargyloxyimino)-1,7,7-tri-(methyl)--bicyclo[2.2.1]heptane has caused a sufficient protection against the herbicide for it to be used on the crop, respectively.

The results are summarized in the following tables I and II.

Table I

Protective Effect of 2-(propargyloxyimino)-1,7,7-tri-(methyl)-bicyclo[2.2.1]heptane
on rice

| 2-(Propargyloxyimino)--1,7,7-tri-(methyl)--bicyclo[2.2.1]heptane seed coating Rate in % by weight, based on the seed weight | Biological Effectiveness Rates of 2-[{2'-(chloro)-phenyl}-methyl]-4,4-di-[methyl]--isoxazolidin-3-one | | | |
|---|---|---|---|---|
| | 0.125 kg/ha | 0.250 kg/ha | 0.500 kg/ha | 0.000 kg/ha |
| 0.031 | 12 | 12 | 25 | 0 |
| 0.063 | 12 | 12 | 12 | 12 |
| 0.125 | 0 | 12 | 25 | 0 |
| 0.250 | 12 | 12 | 12 | 0 |
| 0 | 12 | 74 | 96 | – |

Table II

Protective effect of 2-(propargyloxyimino)-1,7,7-tri-(methyl)-bicyclo[2.2.1]heptane
on rice cultivars

| Rice Cultivar | Seed treated with 0.25% by weight of 2-(propargyloxyimino)-1,7,7-tri--(methyl)-bicyclo[2.2.1]heptane, based on the weight of the seeds | Biological Effectiveness Rates of 2-[{2'-(chloro)-phenyl}-methyl]--4,4-di-[methyl]-isoxazolidin-3-one | | | |
|---|---|---|---|---|---|
| | | 0.125 kg/ha | 0.250 kg/ha | 0.500 kg/ha | 0.000 kg/ha |
| Calrose | yes | 0 | 12 | 12 | 0 |
| Calrose | no | 25 | 25 | 75 | – |
| Labelle | yes | 0 | 12 | 55 | 0 |
| Labelle | no | 12 | 25 | 75 | – |
| Saslushikt | yes | 12 | 12 | 25 | 0 |
| Saslushikt | no | 40 | 44 | 81 | – |

It results from the above tables I and II that by
t .. treatment of the rice seeds with the 2-(propar-
gyloxyimino)-1,7,7-tri-(methyl)-bicyclo[2.2.1]heptane
the phytotoxicity of the 2-[{2'-(chloro)-phenyl}-methyl]-
-4,4-di-[methyl]-isoxazolidin-3-one with regard to this
crop significantly was reduced.

In a similar manner the effect of 2-(propar-
gyloxyimino)-1,7,7-tri-(methyl)-bicyclo[2.2.1]heptane
on a variety of plant species was determined. The results
of these experiments are summarized in the following
table III.

Table III

Effect of 2-(propargyloxyimino)-1,7,7-tri-(methyl)-bicyclo[2.2.1]heptane seed treatment
on selected plant species

| Plant species | Biological Effectiveness | | | | |
|---|---|---|---|---|---|
| | Rates of 2-[{2'-(chloro)-phenyl}-methyl]-4,4-di-[methyl]-isoxazolidin-3-one | | | | |
| | 0.25 kg/ha | | 0.50 kg/ha | | 0.000 kg/ha |
| | un-treated | seeds treated with 0.5% by weight of 2-(propargyloxy-imino)-1,7,7-tri--(methyl)-bi-cyclo[2.2.1]heptan based on the weight of the seeds | un-treated | seeds treated with 0.5% by weight of 2-(propargyloxy-imino)-1,7,7-tri--(methyl)-bi-cyclo[2.2.1]heptan based on the weight of the seeds | seeds treated with 0.5% by weight of 2-(propargyloxy-imino)-1,7,7-tri--(methyl)-bi-cyclo[2.2.1]heptan based on the weight of the seeds |
| Rice of cultivar Calrose | 40 | 12 | 81 | 25 | 0 |
| Sorghum | 63 | 0 | 99 | 25 | 12 |
| Cotton | 81 | 12 | 99 | 75 | 0 |
| Corn | 12 | 100 | 100 | 94 | - |
| Wheat | 99 | 98 | 100 | 100 | 12 |

From the results of the above table III the protective effect of 2-(propargyloxyimino)-1,7,7-tri-(methyl)-
-bicyclo[2.2.1]heptane with regard to rice and sorghum
clearly may be taken whereas with regard to cotton
still occurs a slight protective effect and virtually
no protective effect with regard to corn and wheat.

Claims

### Claims

1.) The use of 2-(propargyloxyimino)-1,7,7-tri-(methyl)-bicyclo[2.2.1]heptane as an antidotum with regard to the herbicide 2-[{2'-(chloro)-phenyl}-methyl]-4,4-di-[methyl]-isoxazolidin-3-one for the protection of rice and sorghum against damage by the said herbicide.

2.) The use according to claim 1, characterized in that one carries out a treatment of rice or sorghum seeds, respectively.

3.) The use according to claim 1 or 2, characterized in that one carries out the treatment of rice or sorghum seeds, respectively, with 0.03 to 0.75% by weight of the 2-(propargyloxyimino)-1,7,7-tri-(methyl)-bicyclo[2.2.1]heptane, based on the weight of the untreated rice or sorghum seeds, respectively.

4.) The use according to claims 1 to 3, characterized in that one carries out the treatment of rice or sorghum seeds, respectively, with 0.06 to 0.5% by weight of the 2-(propargyloxyimino)-1,7,7-tri-(methyl)-bicyclo[2.2.1]heptane, based on the weight of the untreated rice or sorghum seeds, respectively.

Abstract

## DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| D,A | US-A-4 244 888  (Z. BUDAI et al.) <br> * column  1, line 62 - column 2, line 47; claim * | 1 | A 01 N   43/80 <br> A 01 N   25/32  // <br> (A 01 N   43/80 <br> A 01 N   35/10 ) |
| A | GB-A-2 080 289  (FMC) <br> * page 19, lines 28-35; table 1; claims 1,17, 26-31 * | 1,2 | |
| A | EP-A-0 009 555  (BASF) <br> * claims * | 1 | |

TECHNICAL FIELDS
SEARCHED (Int. Cl. ³)

A 01 N

The present search report has been drawn up for all claims

| Place of search | Date of completion of the search | Examiner |
|---|---|---|
| THE HAGUE | 28-09-1984 | FLETCHER A.S. |